# EUROPÄISCHE PATENTSCHRIFT

(11) **EP 0 522 672 B1**
(45) Veröffentlichungstag und Bekanntmachung des Hinweises auf die Patenterteilung: **11.10.1995**
(21) Anmeldenummer: 92250178.8
(22) Anmeldetag: 08.07.1992
(51) Int. Cl.: B60B 23/10, B60B 3/04

(54) **Zweiteiliges Fahrzeugrad**
Two-piece vehicle wheel
Roue de véhicule en deux pièces

(30) Priorität: 12.07.1991 DE 4123583
(43) Veröffentlichungstag der Anmeldung: 13.01.1993
(73) Patentinhaber: MANNESMANN Aktiengesellschaft, 40027 Düsseldorf (DE)
(72) Erfinder: Nutzmann, Wolfgang, W-5650 Solingen (DE)
(74) Vertreter: Presting, Hans-Joachim, Dipl.-Ing.

(56) Entgegenhaltungen:
- WO-A-85/02586
- DE-U- 9 108 842
- FR-A- 2 471 291
- FR-A- 2 588 511
- GB-A- 436 918
- US-A- 1 886 610
- US-A- 4 982 998

## Beschreibung

Die Erfindung betrifft ein zweiteiliges Fahrzeugrad gemäß dem Gattungsbegriff des Hauptanspruchs.

Aus Gewichts- und Gestaltungsgründen werden zunehmend Verbundräder verwendet, bei denen Felge und Schüssel getrennt über möglicherweise unterschiedliche Verfahrensweisen hergestellt und miteinander verbunden werden.
Ein gattungsgemäßes Verbundrad dieser Art ist der FR-A-2471291, insbesondere Figur 3 zu entnehmen. Dieses bekannte Fahrzeugrad besteht aus einer einteiligen, ein Tiefbett aufweisenden Felge und einer einteiligen Schüssel, die im schräg verlaufenden Übergangsbereich vom Tiefbett zur Wulstsitzfläche mittels einer Schraubverbindung lösbar miteinander verbunden sind. Dazu sind im Übergangsbereich Öffnungen angebracht, durch die eine selbstschneidende Schraube hindurchsteckbar ist. Die Schraube dringt in den verdickt ausgeführten äußeren Umfangsbereich der Schüssel ein. Die Kontur, des äußeren Umfangsbereiches der Schüssel ist so gestaltet, daß er zum einen an der Außenseite des Übergangsbereiches der Felge und zum anderen an der Außenseite der Wulstsitzfläche zur Anlage kommt. Nachteilig bei dieser Konstruktion ist, daß durch die notwendigen Öffnungen in der Felge diese belastungsmäßig geschwächt wird. Weiterhin ist der in den Felgenraum hineinragende Kopf der Schraube bei der Montage des Reifens störend, da beim Aufziehen die Wulstlippe beschädigt werden kann. Nach dem Aufziehen des Reifens ist ein Nachziehen der Schrauben nicht möglich, so daß Lockerungen nicht beseitigt werden können.

Ein gattungsgemäßes Verbundrad dieser Art ist der GB 1316954, insbesondere Figur 3 zu entnehmen. Dieses Verbundrad besteht aus einer einteiligen, ein Tiefbett aufweisenden Felge und einer einteiligen Schüssel, die unter Verwendung eines auf der außenliegenden Seite der Tiefbettflanke angeschweißten Bolzens miteinander verbunden sind. Nach der Vormontage von Schüssel und Felge wird der Bolzen durch eine im äußeren Randbereich der Schüssel angeordnete Öffnung gesteckt und auf der Felge durch Schweißen befestigt. Anschließend wird am freien Ende des Bolzens ein Kopf angeformt und damit eine unlösbare Verbindung geschaffen. Nachteilig bei dieser Konstruktion ist, daß die Radialkräfte und ein großer Teil der Axialkräfte vom Verbindungsmittel aufgenommen werden müssen und somit die Belastbarkeit eingeschränkt ist.

Eine ähnliche Konstruktion eines Verbundrades ist der DE-OS 40 19 649 zu entnehmen. Dieses Verbundrad besteht aus einer einteiligen, ein Tiefbett aufweisenden Felge, die im Tiefbettbereich einen radial nach innen sich erstreckenden Flanschabschnitt mit über den Umfang verteilt angeordneten Bolzenlöchern aufweist. Die einteilige Schüssel weist im äußeren Randbereich einen komplementär zum Flanschabschnitt der Felge ausgebildeten Umfangsabschnitt und ebenso über den Umfang verteilt angeordnete Bolzenlöcher auf. Durch die Bolzenlöcher der Felge und der Schüssel werden Schrauben gesteckt und anschließend Muttern aufgeschraubt, so daß sich eine kraftschlüssige Verbindung ergibt.

Nachteilig bei diesem Fahrzeugrad ist, daß die Gestaltungsmöglichkeit eingeschränkt ist, da der Flanschabschnitt der Felge nur durch Gießen oder aber über ein aufwendiges Schmiedeverfahren mit nachfolgender mechanischer Bearbeitung herstellbar ist. Von weiterem Nachteil ist, daß die Felge ein Gußkörper ist, der zur Übertragung der Kräfte dickwandiger ausgelegt werden muß im Vergleich zu einer gewalzten oder gepreßten Felge. Dies wirkt sich ungünstig auch auf das Gesamtgewicht aus. Ein ähnlich gestaltetes Verbundrad ist der DE-G 90 14 530 zu entnehmen. Der ein Tiefbett aufweisende Felgenkörper ist im Tiefbettbereich mit einer radinnen oder radaußenseitig liegenden ringförmigen Materialverdickung versehen, in die mehrere über den Umfang verteilt und parallel zur Radachse liegende Gewindebohrungen angeordnet sind. Die scheibenförmig ausgebildete Schüssel weist im Bereich ihres äußeren Umfanges entsprechend zu den Gewindebohrungen Öffnungen auf, durch die Gewindeschrauben gesteckt werden können, um somit eine kraftschlüssige Verbindung zwischen Felgenkörper und Schüssel herzustellen. Auch dieses Verbundrad kann nicht als gewichtsoptimiert bezeichnet werden, da durch die notwendige Materialanhäufung im Tiefbettbereich der Felgenkörper nur gießtechnisch oder über ein aufwendiges Schmiedeverfahren herstellbar ist.

Ein mehrteiliges Fahrzeugrad mit einer einteiligen Felge und einer daran mit Schrauben befestigten Schüssel ist in der DE-OS 3915595 offenbart. Vergleichbar wie bei den Vorschlag gemäß der schon erwähnten DE-OS 4019694 weist die Felge einen auf der Innenseite angeordneten und radial nach innen springenden Flansch auf, an dem die Schüssel angeschraubt ist. Nachteilig dabei ist, daß dieser Flansch nur über Gießen oder über ein aufwendiges Schmiedeverfahren herstellbar ist. Der alternative Vorschlag des Anschweißens eines solchen Flansches an der Felge ist ebenfalls von Nachteil, da der gesamte Kraftfluß über die Schweißnaht verläuft und diese dementsprechend stark belastet ist.

Aufgabe der Erfindung ist es, ein verbessertes gattungsmäßiges Verbundrad anzugeben, das höher belastbar und besser geeignet ist zum Aufziehen des Reifens und dessen Verbindung Felge-Schüssel nachgezogen werden kann.

Diese Aufgabe wird mit den im kennzeichnenden Teil des Anspruches 1 angegebenen Merkmalen gelöst. Vorteilhafte Weiterbildungen ergeben sich aus den Unteransprüchen.

Im Unterschied zum bekannten Stand der Technik wird die einteilige Felge aus Band hergestellt, wobei das Material üblicher Kohlenstoffstahl, rostfreier Stahl oder eine Leichtmetallegierung sein kann. Die Anformung eines flanschartigen Teiles an der Felge ist nicht erforderlich, da als Anschlagfläche die auf der Außenseite des Rades liegende Tiefbettflanke verwendet wird. Auf dieser werden an sich bekannte, einen Gewindeabschnitt aufweisende Verbindungsmittel, wie Schweißbolzen oder Stanzbolzen befestigt. Alternativ kann auch eine Mutter angeschweißt werden. Damit die Radialkräfte nicht über die Schraube auf die Schüssel eingeleitet werden, kommt der äußere Umfangsbereich der Schüssel an der Innenseite des von der Tiefbettflanke zur Wulstsitzfläche sich erstreckenden Übergangsbereiches zur Anlage. Fertigungstechnisch kann man das in der Weise realisieren, daß die Schüssel im Durchmesser ein Übermaß in bezug auf den Innendurchmesser des Übergangsbereiches der Felge aufweist und in die Felge eingepreßt wird. Besonders vorteilhaft wird die gewünschte Anlage dann erreicht, wenn die Felge in bekannter Weise im Bereich des Überganges einen sogenannten Flat Hump aufweist. In diesem Fall ist die Kontur des Umfangsbereiches der Schüssel der Kontur des Flat Hump angepaßt. Die axiale Erstreckung der Schüssel im Übergangsbereichs wird so gewählt, daß die Anlage der Schüssel mindestens den Hump-Bereich einschließt. Sie kann sich aber auch über diesen hinaus bis in den Wulstsitzbereich erstrecken.

Der Vorteil des erfindungsgemäßen Fahrzeugrades ist darin zu sehen, daß das gestalterische Design des Fahrzeugrades durch die vielseitigen möglichen Kombinationen erheblich erweitert wird und ein extremer Leichtbau des Rades möglich ist.

In der Zeichnung wird anhand einiger Ausführungsbeispiele das erfindungsgemäße Fahrzeugrad näher erläutert.

Es zeigen:
- Fig. 1: einen Ausschnitt eines radial liegenden Querschnittes eines erfindungsgemäßen Fahrzeugrades mit einem Schweißbolzen
- Fig. 2: wie Fig. 1, jedoch mit einer Mutter als Verbindungsmittel
- Fig. 3: wie Fig. 1, jedoch mit einer aus Band gefertigten Schüssel

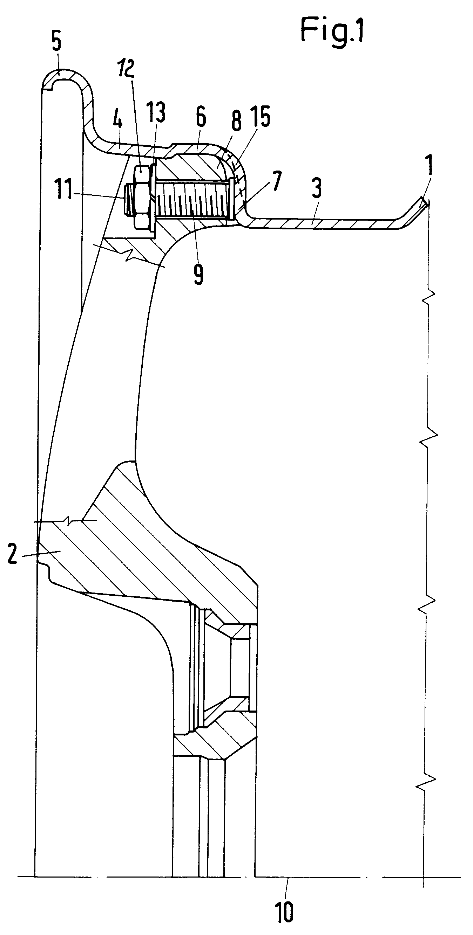

In Figur 1 ist ausschnittsweise ein radial liegender Querschnitt eines erfindungsgemäßen Fahrzeugrades dargestellt. Das zweiteilige Fahrzeugrad besteht aus einer aus Band hergestellten einteiligen Felge 1 und einer beispielsweise aus Guß hergestellten einteiligen Schüssel 2. Die Felge 1 weist ein Tiefbett 3, eine Wulstsitzfläche 4 und ein radial nach innen sich erstreckendes Felgenhorn 5 auf. In diesem Ausführungsbeispiel ist der Übergangsbereich vom Tiefbett 3 zur Wulstsitzfläche 4 als Flat Hump 6 ausgebildet. Die radaußenseitig liegende Tiefbettflanke 7 weist radial am Umfang verteilte nahezu rechtwinklig zum Tiefbett 3 verlaufende Eindrückungen 15 auf. Der im äußeren Umfangsbereich liegende Schüsselbereich 8 ist der Kontur des Flat Hump 6 angepaßt und kommt dort zur Anlage. Das Verbindungsmittel, hier beispielsweise ein Schweißbolzen 9 ist an der Radaußenseite der Eindrückungen 15 in der Tiefbettflanke 7 angeschweißt und zwar so, daß die Bolzenachse nahezu parallel zur Radachse 10 verläuft. Der einen Gewindeabschnitt 11 aufweisende Schweißbolzen 9 erstreckt sich durch die Wandung des äußeren Schüsselbereiches und ist mehrfach über den Umfang verteilt an der Felge 1 angeordnet. Auf den Gewindeabschnitt 11 des Schweißbolzens 9 kann eine Mutter 12 aufgeschraubt und gegen einen Federring 13 gepreßt werden. Nach dem Festziehen aller Muttern 12 entsteht eine kraftschlüssige steife Verbindung zwischen Felge 1 und Schüssel 2.

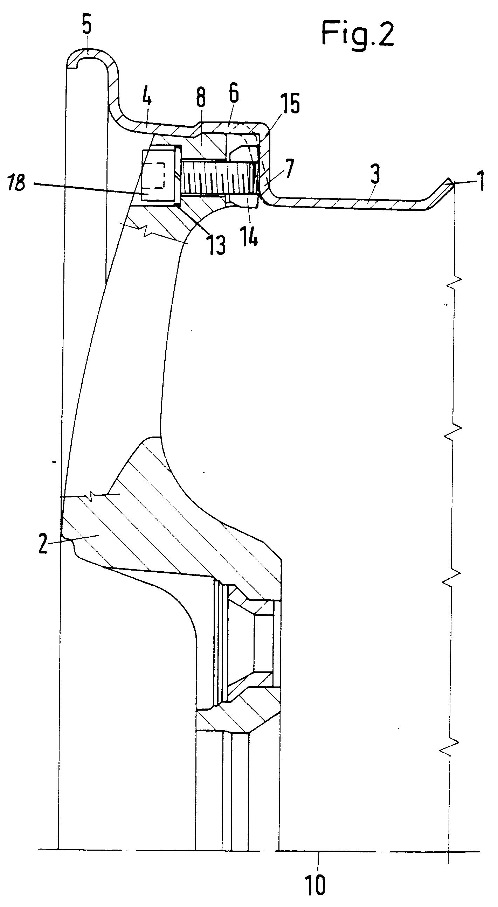

Figur 2 zeigt in der gleichen Darstellungsart wie Figur 1 ebenfalls ein erfindungsgemäßes Fahrzeugrad, mit dem Unterschied, daß hier eine Mutter 14 als Verbindungsmittel vorgesehen ist. Aus Vereinfachungsgründen sind die gleichen Teile mit dem gleichen Bezugszeichen versehen worden. Auch in diesem Beispiel ist der Übergangsbereich der Felge 1 zwischen Tiefbett 3 und Wulstsitzfläche 4 als Flat Hump 6 ausgebildet. Der äußere Umfangsbereich der Schüssel 2 ist dieser Kontur angepaßt und erstreckt sich wie in Figur 1 über den Bereich des Flat Hump 6 hinein bis in den Bereich der Wulstsitzfläche 4. Zur kraftschlüssigen Verbindung wird in diesem Beispiel eine Innensechskantschraube 18 verwendet, die in die angeschweißte Mutter 14 einschraubbar ist und ebenfalls gegen einen Federring 13 gepreßt wird. Der Federring 13 dient in beiden Ausführungsbeispielen (Fig. 1 + 2) als Sicherung gegen ein Lösen der Verbindung.

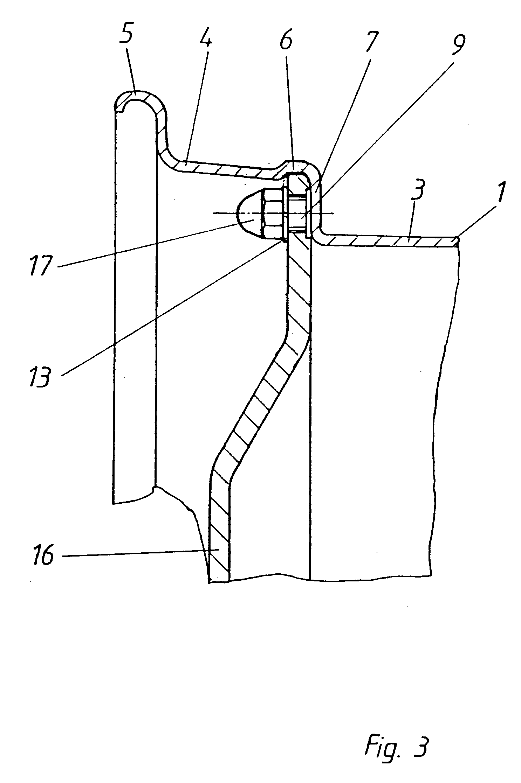

In Figur 3 ist ein Ausführungsbeispiel dargestellt, bei dem eine aus Band hergestellte Schüssel 16 verwendet wird. Als Verbindungsmittel dient ein Schweißbolzen 9, der sich durch in der Wandung der Schüssel 16 angeordnete Öffnungen erstreckt. Im Unterschied zur Figur 1 wurde hier eine Hutmutter 17 verwendet, die ebenfalls gegen einen Federring 13 gepreßt wird. Die axiale Erstreckung der Schüssel 16 ist im Unterschied zu den in Figuren 1 und 2 dargestellten Ausführungsbeispielen sehr viel geringer, da die radaußenseitig liegende radial verlaufende Tiefbettflanke 7 nahezu rechtwinklig zum Tiefbett 3 verläuft. Aber auch bei diesem Ausführungsbeispiel wären Eindrückungen 15, wie in den Figuren 1 und 2 dergestellt, denkbar. Aber auch bei dieser Ausführungsform ist sichergestellt, daß die radialen Kräfte nicht unmittelbar auf das Verbindungsmittel einwirken.

## Patentansprüche

1. Zweiteiliges Fahrzeugrad bestehend aus einer einteiligen, ein Tiefbett (3) aufweisenden Felge (1) und einer einteiligen Schüssel (2,16), die im Übergangsbereich vom Tiefbett zur Wulstsitzfläche (4) mittels einer Schraubverbindung (9,12,14,15,17,18) lösbar miteinander verbunden sind, wobei die auf der Außenseite des Fahrzeugrades liegende Tiefbettflanke (7) nahezu rechtwinklig zum Tiefbett (3) verläuft und der radial äußere Umfangsbereich der Schüssel (2,16) mindestens an der Innenseite des von der Tiefbettflanke (7) zur Wulstsitzfläche (4) sich erstreckenden, im wesentlichen axial liegenden und einen an sich bekannten Flat Hump (6) aufweisenden Übergangsbereich zur Anlage kommt und Felge (1) und Schüssel (2,16) lösbar miteinander verbunden sind,
dadurch gekennzeichnet,
daß die Schraubverbindung (9,12,14,15,17,18) eine Schraube (9) und eine Mutter (14) aufweist und daß entweder die Mutter (14) oder die Schraube (9) an der Innenseite des Übergangsbereiches angeschweißt ist und daß zur Erzeugung einer Vorspannung die Schüssel (2,16) im Durchmesser ein Übermaß in bezug auf den Innendurchmesser des Übergangsbereiches der Felge (1) aufweist.

2. Zweiteiliges Fahrzeugrad nach Anspruch 1,
**dadurch gekennzeichnet,**
daß die auf der Außenseite des Fahrzeugrades liegende Tiefbettflanke (7) am Umfang verteilt angeordnete Eindrückungen (15) aufweist, die nahezu rechtwinklig zum Tiefbett (3) verlaufen und entweder die Schraube (9) oder die Mutter (14) auf der nach Radaußen liegenden Stirnfläche der Eindrückung (15) befestigt ist.

3. Zweiteiliges Fahrzeugrad nach den Ansprüchen 1 und 2,
**dadurch gekennzeichnet,**
daß die Anlage der Schüssel (2) im übergangsbereich sich über den Flat Hump(6) hinaus auch auf einen Teil der Wulstsitzfläche (4) erstreckt.

## Claims

1. Two-part vehicle wheel comprising a one-part rim (1) having a drop-base (3) and a one-part dish (2, 16) which are releasably connected to each other, in an area of transition from a said dish to a bulge seat (4), by means of a bolt connection (9, 12, 14, 15, 17, 18), whereby a side (7), of a drop-base, which lies on an outer side of a vehicle wheel, running nearly at right-angles to a drop-base (3) and a radially outer peripheral area of a dish (2, 16) lie against each other, at least on an inner side of a transition area which is axially positioned and has a known flat hump (6) extending from a side (7) of a drop base to a bulge seat (4), and a rim (1) and dish (2, 16) are releasably connected to each other,
wherein
a bolt connection (9, 12, 14, 15, 17, 18) has a bolt (9) and a nut (14) and either a nut (14) or a bolt (9) is welded onto an inner side of a transition area and a dish (2, 16) has an excess, in diameter, in relation to an inner diameter of a transition area of a rim (1) in order to put a dish (2, 16) under tension.

2. Two-part vehicle wheel in accordance with claim 1,
wherein
a side (7), of a drop-base, lying on an outer side of a vehicle wheel, has indentations (15), which run nearly at right-angles to a drop-base (3) and either a bolt (9) or a nut is attached to an end face of an indentation (15) positioned towards an outer side of a wheel, arranged distributed around its periphery.

3. Two-part vehicle wheel in accordance with claim 2 or claim 3,
wherein
abutment contact of a dish (2) in a transition area also extends beyond a flat hump (6) onto a section of a bulge seat (4).

## Revendications

1. Roue de véhicule automobile en deux pièces, constituée d'une jante (1) en une pièce, présentant une base creuse (3), et d'un flan en une pièce (2,16), qui sont reliés ensemble de façon amovible, dans la zone de transition de la base creuse vers la surface de siège du talon (4), au moyen d'une liaison à vis (9,12,14,15,17,18), le flanc de base creuse (7) se trouvant sur le côté externe de la roue du véhicule automobile s'étendant pratiquement perpendiculairement à la base creuse (3) et la zone périphérique radialement externe du flan (2,16) venant en appui au moins contre le côté interne de la zone de transition s'étendant du flanc de base creuse (7) vers la surface de siège du talon (4), étant essentiellement axiale, et présentant une bosse aplatie (6) connue en soi, et la jante (1) et le flan (2,16) étant reliés ensemble de façon amovible,
caractérisée en ce que la liaison à vis (9,12,14,15,17,18) présente une vis (9) et un écrou (14), et en ce que soit l'écrou (14), soit la vis (9) est soudé sur le côté interne de la zone de transition, et en ce que, pour engendrer une précontrainte, le flan (2,16) présente un diamètre surdimensionné relativement au diamètre interne de la zone de transition de la jante (1).

2. Roue de véhicule automobile en deux pièces selon la revendication 1,
caractérisée en ce que le flanc de base creuse (7) se trouvant sur le côté externe de la roue du véhicule automobile présente des empreintes (15) agencées de façon répartie à la périphérie, qui s'étendent pratiquement à angle droit par rapport à la base creuse (3) et soit la vis (9), soit l'écrou (14) est fixé sur la face frontale, s'étendant vers l'extérieur de la roue, de l'empreinte (15).

3. Roue de véhicule automobile en deux pièces selon les revendications 1 et 2,
caractérisée en ce que l'appui du flan (2) dans la zone de transition s'étend au-delà de la bosse aplatie (6) également sur une partie de la surface de siège du talon (4).
